(19) Europäisches Patentamt
European Patent Office
Office européen des brevets

(11) Publication number: **0 435 689 A2**

# (12) EUROPEAN PATENT APPLICATION

(21) Application number: **90314388.1**

(51) Int. Cl.[5]: **C09K 9/02**, G02F 1/17

(22) Date of filing: **28.12.90**

(30) Priority: **29.12.89 US 458969**

(43) Date of publication of application:
**03.07.91 Bulletin 91/27**

(84) Designated Contracting States:
**DE FR GB IT**

(71) Applicant: **DONNELLY CORPORATION**
**414 East Fortieth Street**
**Holland Michigan 49423 (US)**

(72) Inventor: **Varaprasad, Desaraju Venkatapanduranga**
**327 Ridgeland Court, Apt. 2**
**Holland, Michigan 49423 (US)**
Inventor: **Lynam, Niall Richard**
**248 Foxdown**
**Holland, Michigan 49423 (US)**
Inventor: **Habibi, Hamid Reza**
**2630 Knagspough**
**Holland, Michigan 49423 (US)**
Inventor: **Desaraju, Padama**
**327 Ridgeland Court, Apt. 2**
**Holland, Michigan 49423 (US)**

(74) Representative: **Sheard, Andrew Gregory et al**
**Kilburn & Strode 30, John Street**
**London WC1N 2DD (GB)**

(54) **Electrochemichromic solutions and devices containing them.**

(57) Current leakage can be reduced and UV stability enhanced by using electrochemichromic solutions whose solvents include, either solely or in combination with other solvents, glutaronitrile (GNT).

EP 0 435 689 A2

# ELECTROCHEMICHROMIC SOLUTIONS AND DEVICES CONTAINING THEM

The present invention relates to electrochemichromic solutions and devices based thereon. Such solutions are designed to either colour or clear, depending on desired application, under the influence of applied voltage.

Such devices have been suggested for use as rearview mirrors in automobiles such that in night driving conditions, application of a voltage would darken a solution contained in a cell incorporated into the mirror (U.S. Patent 3,280,701, October 25, 1966). Similarly, it has been suggested that windows incorporating such cells could be darkened to block out sunlight, and then allowed to lighten again at night. Electrochemichromic cells have been used as display devices and have been suggested for use as antidazzle and fog-penetrating devices in conjunction with motor vehicle headlamps (British Patent Specification 328017, May 15, 1930).

United States Patent 4,090,782 to Bredfeldt et al., United States Patent 4,572,119 to Ueno et al. (June 1988), Chemical Abstract 86 :196871c, 72-Electro. Chemistry, Vol. 86, 1977, I.V. Shelepin et al. in Electrokhimya, 13(3), 404-408 (March 1977), O.A. Ushakov et al., Electrokhimya, 14(2), 319-322 (February 1978), U.S.S.R. Patent 566863 to Shelepin (August 1977), U.S. Patent 3,451,741 to Manos, European Patent Publication 240,226 published October 7, 1987 to Byker, United States Patent 3,506,229 to Schoot et al., United States Patent 4,093,358 to Shattuck et al., European Patent Publication 0012419 published June 25, 1980 to Shattuck and United States Patent 4,139,276 to Clecak et al. all disclose electrochemichromic solutions of anodic and cathodic electrochromically colouring components which provide self-erasing, high colour contrast, single compartment cells. Such anodic and cathodic colouring components comprise redox couples selected to exhibit the following reaction :

$$\underset{\text{(Low energy pair)}}{\underset{\text{(Colourless)}}{RED_1 + OX_2}} \quad \underset{\text{voltage}}{\rightleftharpoons} \quad \underset{\text{(High Energy Pair)}}{\underset{\text{(Coloured)}}{OX_1 + RED_2}}$$

The redox couple is selected such that the equilibrium position of the mixture thereof lies completely to the left of the equation. At rest potential, the anodically colouring reductant species $RED_1$, and the cathodically colouring oxidant species $OX_2$ are colourless. To cause a colour change, voltage is applied and the normally colourless $RED_1$ is anodically oxidised to its coloured antipode $OX_1$, while, simultaneously, $OX_2$ is cathodically reduced to its coloured antipode, $RED_2$. These cathodic/anodic reactions occur preferentially at the electrodes which, in practical devices, are typically transparent conductive electrodes. Within the bulk of the solution, the redox potentials are such that when $RED_2$ and $OX_1$ come together, they revert to their lower energy form.

This means the applied potential need only suffice to drive the above reaction to the right. On removing the potential, the system reverts to its low energy state and the cell spontaneously self-erases.

Such redox pairs are placed in solution in an inert solvent. Typically, an electrolyte is also added. This solution is then placed into a relatively thin cell, between two conductive surfaces. In most applications, at least one of the conductive surfaces comprises a very thin layer of a transparent conductor such as indium tin oxide (ITO), doped tin oxide or doped zinc oxide deposited on a glass substrate so that the cell is transparent from at least one side. If the device is to be used in a mirror, the second surface is typically defined by a relatively thin layer of transparent conductor such as indium tin oxide, doped tin oxide or doped zinc oxide deposited on another glass substrate, which is silvered or aluminised or otherwise reflector coated on its opposite side. In the case of solar control windows, the second glass substrate would of course not be silvered on its opposite side so that when the redox pair is colourless, the window would be entirely transparent.

A wide variety of cathodically colouring species, anodically colouring species, inert current carrying electrolytes and solvent systems are described in prior art. However, combinations of these suitable to meet the performance required for outdoor weathering, particularly for outdoor weathering of automobile rearview mirrors and automobile and architectural windows, have hitherto not been revealed. Nor have combinations been revealed that, in conjunction with possessing inherent UV stability, meet the temperature extremes required in commercial automotive and architectural applications. Nor have combinations been revealed that meet the UV resilience and temperature extremes required in automotive and architectural applications and that simultaneously have sufficiently low vapour pressures to facilitate use of a vacuum backfill technique to fill thin cells where the interpane spacing is very small. With higher vapour pressures, undesirable voids are left with the solution in the vacuum backfilled cell.

Vacuum backfilling has been used to fill liquid crystal displays. Liquid crystal displays are typically much

smaller than the large areas of typical electrochemichromic devices such as mirrors and windows. Liquid crystal materials have inherently high viscosity and low vapour pressure. To fill with liquid crystal using the vacuum backfill technique, elevated temperatures are typically used so that the liquid crystal viscosity is sufficiently low that the material flows into and fills the cavity. Because of their inherent low vapour pressure even at elevated temperatures, voids are not a significant problem during backfilling with liquid crystals. The same is not true for many electrochemichromic solvents cited in the prior art.

Many of the organic solvents proposed in the prior art as solvents for electrochemichromic compounds have disadvantages when chosen for UV resilient devices. This is because commonly suggested solvents, such as acetonitrile, propylene carbonate, gamma-butyrolactone, methyl ethyl ketone, dimethylformamide and the like, are highly transmissive to UV radiation. Incoming UV radiation that is admitted by the ITO-coated glass substrate is unattenuated by the solvent and thus is capable of photolyzing or otherwise degrading any UV vulnerable solute in solution in that solvent.

Addition of UV stabilisers such as benzotriazoles, benzophenones, or hindered amine complexes, as known in prior art, can help increase solution stability to UV radiation, but there are limitations and disadvantages to addition of UV stabilisers. Because they are held in solutions of low to moderate viscosity, both the UV stabiliser and the electrochemichromic solutes are free to randomly move about in the solution. Thus, an incoming photon of UV radiation may impinge and thus degrade an electrochemichromic solute species rather than be absorbed by a UV absorber in solution. Also, solubility within the selected solvent places limits on the amount of UV stabiliser that can be added.

Solute solubility is also a factor in connection with the choice of solvents for electrochemichromic components. High solubility is preferred for the anodic and cathodic species as well as for electrolytes which are usually added to such solutions. Such electrolytes enhance cell performance and must be soluble in the solvent.

Yet another problem encountered in electrochemichromic devices relates to current leakage. When the electrochemichromic cell is coloured by the application of voltage, the coloured species $OX_1$ and $RED_2$ continually want to recombine and return to their equilibrium, colourless condition. The rate of recombination of the coloured species $OX_1$ and $RED_2$ within the bulk of the solution is directly proportional to their diffusion coefficient in the solvent used. In order to compensate for the tendency of the coloured species to recombine and go to the colourless equilibrium state, current must continually leak into the electrochemichromic solution via the conductive electrodes that typically sandwich said solution.

Because current must flow across the conductive surface of the transparent conductor used on at least one of the substrates that sandwich the electrochemichromic cell, and because these transparent conductors have finite sheet resistance, applied potential will be highest adjacent to the bus bar connector typically located at an edge perimeter and will be lowest near the center of the device as current passes across the conductive glass surface to colour remote regions. Thus, if the leakage current is high and/or the sheet resistance of the transparent conductor is high, the potential drop that ensues across the transparent conductor itself results in a lower potential being applied to remote regions. Colouration is therefore non-uniform with the edge regions nearest the bus bar colouring deepest and the central regions colouring lightest. Such non-uniformity in colouration is commercially undesirable. For a given transparent conductor sheet resistance, the lower the leakage current the more uniform the colouration. This is an important advantage ; otherwise, a thicker and hence more costly and less transparent conductive coating would be needed to reduce the sheet resistance to accommodate the higher leakage currents seen with solvents suggested in the prior art.

Yet another disadvantage of higher leakage currents is their imposition of a drain on battery-power sources in some instances. If an electrochemichromic device were used in a sunroof, for example, it would be desirable to have the sunroof coloured dark while the car is parked in a parking lot. If the current leakage is too great, the operator could find that the car battery has been drained as a result of current being drawn by the coloured sunroof.

One further problem which plagues electrochemichromic devices is "segregation." When first bleached after being held for a prolonged period in the coloured state, bands of colour are seen adjacent to the bus bar connectors to the transparent conductive electrodes that sandwich the electrochemichromic solution. In electrochemichromic solutions revealed in prior art, various methods must be used to reduce segregation. These include thickening the electrochemichromic solution, use of low concentrations of electrochemichromically active species, and use of high concentrations of current-carrying electrolyte. The addition of thickeners will also reduce leakage current. One problem with adding thickeners is that the solution can become so viscous that vacuum backfilling a thin electrochemichromic cell becomes commercially unfeasible.

As a result of these drawbacks, electrochemichromic solutions and devices based thereon have not achieved the degree of commercial success which they potentially could achieve.

According to a first aspect of the present invention there is provided an electrochromic liquid comprising a redox chemical pair whose colour can be varied by a variation in the applied voltage and a solvent comprising

at least 25% by volume of glutaronitrile (GNT).

The redox chemical pair will generally be dissolved in the solvent. Thus, the electrochromic liquid of the present invention is usually an electrochemichromic solution.

It is preferred that the redox chemical pair possess colour in the presence of an applied voltage, but are colourless (or bleached) to a colourless condition in the absence of an applied voltage.

Thus, by changing the applied voltage, the redox chemical pair can be made to change from a coloured state to a colourless state, or vice versa.

The liquid will preferably contain one or more electrolytes. These will suitably be dissolved in the solvent. The electrolyte will suitably be present up to a concentration of 0.05 M. Preferred concentrations range from 0.01 to 0.04 M, optimally from 0.02 to 0.04 M. Preferred electrolytes include hexafluoro compounds, such hexafluorophosphate and hexafluoroarsenate.

The solvent comprises at least 25% by volume of glutaronitrile, it will be appreciated that apart from glutaronitrile, one or more other solvents may be mixed with glutaronitrile in the electrochemichromic liquids according to the present invention. Thus, the solvent preferably includes 3,3′-oxydipropionitrile (ODPN), 3-hydroxypropionitrile (HPN), 3-methylsulpholane (MS) and/or propylene carbonate (PC). It is preferred that one of these four additional solvents are provided with the glutaronitrile in a ratio by volume of from 75 : 25 to 25 : 75. Particularly preferred ratios by volume range from 40 : 60 to 60 : 40.

The redox pair preferably comprises a cathodic material (which is optionally provided with a counterion) and an anodic material. Preferred cathodic materials include viologens, such as $C_{1-8}$alkyl viologens and aryl or $C_{1-8}$alkylaryl viologens.

If a counterion is present, this is preferably a fluoro-containing counterion, such as a tetrafluoro-containing counterion. Particularly preferred counterions include perchlorate, tetrafluoroborate, tetrafluoromethanesulphonate, hexafluorophosphate and/or hexafluoroarsenate.

Preferred anodic materials include phenazines, such as di($C_{1-8}$)alkylphenazines, diamines, such as phenylene diamines, benzidines and fulvalenes.

The cathodic material and/or anodic material (and counterion if present) are suitably provided at a concentration of from 0.01 to 0.05 M, such as from 0.02 to 0.04 M. Optimal concentration ranges are from 0.02 to 0.03 M.

Particularly preferred cathodic materials include methyl, ethyl, benzyl and/or heptyl viologen. This is preferably provided with a counterions which is perchlorate, tetrafluoroborate, trifluoromethanesulphonate, hexafluorophosphate and/or hexafluoroarsenate.

Preferred anodic materials are as follows :

DMPA - 5,10-dihydro-5,10-dimethylphenazine,
DEPA - 5,10-dihydro-5,10-diethylphenazine,
DOPA - 5,10-dihydro-5,10-dioctylphenazine,
TMPD - N,N,N′,N′-tetramethylphenylenediamine,
TMBZ - N,N,N′,N′-tetramethylbenzidine, and/or
TTF - Tetrathiafulvalene.

A particularly preferred electrochemichromic liquid of the present invention has a cathodic material which is methyl and/or ethyl viologen, a counterion which is hexafluorophosphate and/or hexafluoroarsenate and an anodic material which is 5,10-dihydro-5,10-dimethylphenazine. It is preferred that the anodic and/or cathodic material are employed at a concentration of about 0.025 M.

The electrochemichromic liquid may be provided with a UV stabiliser. Preferred UV stabilisers include benzotriazoles, benzophenones hindered amine complexes. These are suitably provided at a concentration of up to 0.2 M. Alternatively, the UV stabiliser is provided at an amount of from 0.2 to 40% weight by volume, such as at least 5% weight by volume. Particularly preferred UV stabilisers are as follows :

(a) 2-(2H-benzotriazole-2-yl)-4-methylphenyl ;
(b) 2,4-dihydroxybenzophenone ;
(c) 2,2′-dihydroxy-4-methoxybenzophenone ; and/or
(d) 2-ethylhexyl-2-cyano-3,3-diphenylacrylate

The present invention can be thought of as being based on the discovery that electrochemichromic solution and devices, based on the use of glutaronitrile (GNT) as the solvent, either alone or in combination with other solvents, may show unexpectedly reduced current leakage and self-screening UV characteristics. Segregation may be minimised without excessive solution viscosity increase and without the need for added thickeners.

The electrochemichromic liquids, (e.g. solutions) of the invention may utilise conventional or equivalent redox systems such as a viologen combined with a phenazine, diamine or benzidine. These may be dissolved in glutaronitrile (GNT) or in a solvent comprising at least 25% by volume of glutaronitrile mixed with one or more other solvents. Such other solvents are suitably 3-hydroxypropionitrile (HPN), 3,3′-oxydipropionitrile (ODPN),

3-methylsulpholane (MS) and/or propylene carbonate (PC), or other solvents that are suitable for electrochemichromic devices. Electrolytes may optionally, but preferably, be used.

A viologen is the preferred cathodic material for the redox pair. $C_{1-8}$alkyl viologens are preferred. Methylviologen, ethylviologen, benzylviologen and heptylviologen are all satisfactory. A 0.025 molar solution of the viologen, e.g. methylviologen, preferred. However, higher concentrations up to the limits of solubility are also operable.

In the structural formulae set forth below, $X^-$ represents the anion of the viologen salt. Various anions can be used, such as fluoro-containing anions. Most preferred anions are hexafluoroanions such as hexafluorophosphate ($PF_6^-$) and/or hexafluoroarsenate ($AsF_6^-$). These may surprisingly enhance viologen solubility.

Viologen 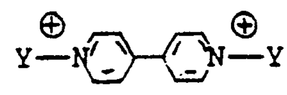 $2X^-$

(Y represents $C_{1-8}$alkyl or aryl, e.g. phenyl($C_{1-8}$)alkyl)

Methylviologen 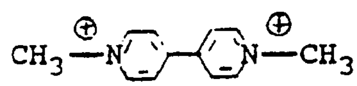 $2X^-$

Ethylviologen 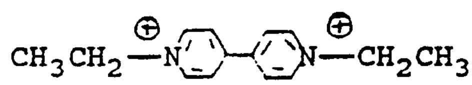 $2X^-$

Benzylviologen 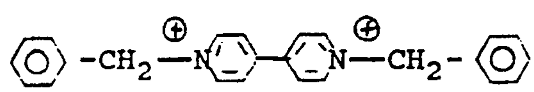 $2X^-$

Heptylviologen 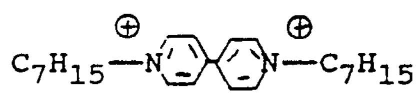 $2X^-$

Preferred counterions for the viologen include fluoro-containing counterions, e.g. hexafluoro counterions. Suitable counterions include :

| | |
|---|---|
| Tetrafluoroborate | $BF_4^-$ |
| Perchlorate | $ClO_4^-$ |
| Trifluoromethane sulfonate | $CF_3SO_3^-$ |
| * Hexafluorophosphate | $PF_6^-$ |
| * Hexafluoroarsenate | $AsF_6^-$ |

[* = particularly preferred]

Preferred anodic colouring materials include :

(a) phenazines : e.g. di($C_{1-8}$)alkyl phenazines :

DMPA - 5,10-dihydro-5,10-dimethylphenazine $R=CH_3$

DEPA - 5,10-dihydro-5,10-diethylphenazine $R=C_2H_5$

DOPA - 5,10-dihydro-5,10-dioctylphenazine $R=C_8H_{17}$
(e.g. $R=C_{1-8}$alkyl).

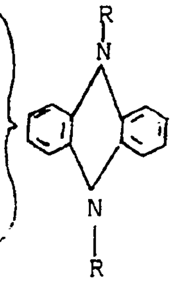

(b) diamines : e.g. phenylene diamines

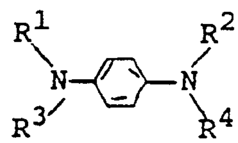

(each of $R^1$ to $R^4$ individually represent a $C_{1-8}$alkyl group)
TMPD - N,N,N',N'-tetramethylphenylenediamine

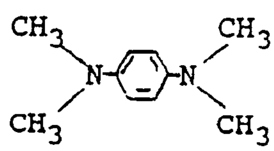

Npt

(c) benzidines :

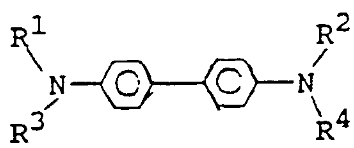

(each of $R^1$ to $R^4$ individually represent a $C_{1-8}$alkyl group)
TMBZ - N,N,N',N'-tetramethylbenzidine

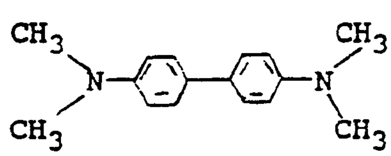

(d) a fulvalene
TTF - Tetrathiafulvalene

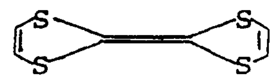

Phenazines are preferred, e.g. at about 0.025 molar solution, such as of 5,10-dihydro-5,10-dimethylphenazine (DMPA).

Numerous electrolytes can be used in electrochemichromic liquids of the present invention. One which can be used in accordance with a preferred embodiment of the invention is a tetrabutylammonium hexafluorophosphate. Preferred concentrations of the electrolyte range from 0.01 to 0.04, e.g. 0.02 to 0.03, optimally about 0.025 molar solution.

UV stabilisers such as Uvinul™ 400, such as at approximately 5% weight by volume, can also be used in the liquids, e.g. solutions of the present invention. As explained below, GNT may surprisingly provide UV self-screening, but such UV stabilisers may additionally be used to further enhance protection.

The most preferred electrochemichromic liquid, e.g. solution, of the invention comprises a solvent comprising at least about 25% GNT, from 0.02 to 0.05, and most preferably about 0.025 molar, methylviologen hexafluorophosphate and/or methylviologen perchlorate, from 0.02 to 0.05, and most preferably about 0.025 molar tetrabutylammonium hexafluorophosphate and/or tetraethylammonium perchlorate, and from 0.02 to 0.0,5 and most preferably about 0.025 molar, 5,10-dihydro-5,10-dimethylphenazine (DMPA).

A second aspect of the present invention relates to an electrochemichromic device containing an electrochemichromic liquid of the first aspect.

The electrochemichromic device is preferably a cell (such as a solar cell), a window, mirror or sunroof.

Preferred devices of the second aspect comprise :

at least two spaced apart plates, each plate (such as a transparent, such as a glass, plate) having an inwardly facing conductive surface (such as tin oxide, zinc oxide or (preferably) tin-indium oxide, ITO, surface) ;

the electrochemichromic solution of the first aspect being contained in the device (such as a cell) which will generally be between the spaced apart plates.

If the device is a mirror, one of the plates may have a silver or aluminium coating on an outwardly facing surface. The plates are suitably from 50 to 250, e.g. 100 to 200, and optimally from 130 to 170, microns apart.

The device of the second aspect will suitably be provided with a seal, which is suitably provided around the periphery of the spaced apart plates. The seal may thus act to space apart plates, and may also act to locate the electrochemichromic liquid between the spaced apart plates and the seal.

The seal itself may contain spacers to assist in spacing apart the two plates. The spacers are preferably small particles such as balls of beads. The spacer will preferably have a diameter which is the same as the distance between the plates. Particularly preferred spacers are glass beads.

The electrochemichromic device will generally be provided with one or more electrical terminals to allow supply of current and/or voltage to the electrochemichromic liquid.

Preferred features and characteristics of the second aspect are as for the first mutatis mutandis.

A third aspect of the present invention relates to a method of reducing leakage current and/or enhancing UV stability in an electrochemichromic device (such as of the second aspect) which may have at least two spaced apart plates, each plate having an inwardly facing conductive surface, and an electrochemichromic liquid located in the device between the plates, the liquid being according to the first aspect. Thus, the liquid will suitably comprises a redox chemical pair, whose colour can be varied by a variation in the applied voltage (such as by being coloured in the presence of an applied voltage and bleaching to a colourless condition in the absence of an applied voltage), and a solvent which comprises at least 25% by volume glutaronitrile.

Preferred features and characteristics of the third aspect are as for the first and second aspect mutatis mutandis.

A fourth aspect of the present invention relates to a method of at least partially filling an electrochemichromic device comprising at least two spaced apart plates (which may be relatively closely spaced), each plate having an inwardly facing conductive surface, the spaced apart plates being sealed (such as around the perimeter) by a seal the method comprising :

providing the device with an aperture for fluid entry, such as by introducing a small gap into the seal of a device ;

evacuating air from the device ;

placing the electrochemichromic device (such as by lowering) into a container of electrochemichromic liquid, such that the aperture is located under a surface of the electrochemichromic liquid, the liquid comprising a redox chemical pair whose current can be varied by a variation in the applied voltage and a solvent comprising at least 25% by volume of GNT ;

exposing the electrochemichromic device to a source of pressure greater than that inside the device to allow the liquid to enter the device. The aperture (such as a gap in the peripheral seal) may then be sealed.

Air is suitably evacuated from the device by placing the device in a vacuum chamber. The container of the electrochemichromic liquid will also generally be inside the vacuum chamber.

After exposing the electrochemichromic device to the source of pressure the vacuum chamber may then be vented to atmospheric pressure. The device may then be suitably removed from the container, preferably before sealing occurs.

The vacuum chamber is preferably pressurised to above atmospheric pressure after it has been vented to atmospheric pressure. Alternatively or in addition, the electrochemichromic liquid is cooled prior to filling the device (such as by backfilling) in order to reduce its vapour pressure.

Preferred features and characteristics of the fourth aspect are as for previous aspects mutatis mutandis.

A fifth aspect of the present invention relates to a process for the preparation of an electrochemichromic liquid of the first aspect, the process comprising admixing the redox chemical pair and the solvent.

Preferred features and characteristics of the fifth aspect are as for previous aspects mutatis mutandis.

The present invention may be illustrated with reference to the accompanying drawings, in which :

Figure 1 is a graph of a solar spectrum in the ultraviolet region as determined in Tucson, Arizona ;

Figure 2 is a cross-sectional view of an electrochemichromic cell of the present invention ;

Figure 3 is a graph of the percent transmittance of solar radiation at various wavelengths through a piece of glass coated with a half wave indium tin oxide coating ;

Figure 4 is a graph of the solar spectrum passed by a piece of glass coated with half wave indium tin oxide;

Figure 5 is a graph of the percent transmittance of solar radiation at various wavelengths for prior art 0.0002 molar acetonitrile solutions of various cathodic compounds used in electrochemichromic cells ;

Figure 6 is a graph of the percent transmittance of solar radiation at various wavelengths by prior art 0.0002 molar acetonitrile solutions of various anodic compounds used in electrochemichromic cells ;

Figure 7 is a graph of the percent transmittance of solar radiation at various wavelengths by the solvent GNT that is used in electrochemichromic liquids of the present invention ;

and

Figure 8 is a graph of the percent transmittance of solar radiation at various wavelengths by prior art solvents in electrochemichromic solutions.

The invention will now be described by way of examples with reference to the accompanying Examples which are provided by way of illustration and are not to be construed as being limiting on the invention.

EXAMPLE A

Figure 2 illustrates an electrochemichromic device according to the present invention which is a cell 1 into which an electrochemichromic liquid, e.g. solution, of the present invention is filled with. Cell 1 comprises a pair of glass plates 10 and 11 each of which is coated on an inwardly facing surface with a half wave indium tin oxide (ITO) coating 12 of about 15 ohms/square sheet resistance. Plates 10 and 11 are separated by peripheral seal 13 so that the interior of the cell has a thickness of 150 microns. Cell 1 is sealed at its perimeter by peripheral seal 13. Seal 13 comprises an epoxy material, to which 150 micron diameter spacers are added, and silk-screened to a thickness of about 150 microns. Glass beads are used as spacers. As shown, cell 1 is intended to be used as a mirror, and thus the rear surface of glass plate 11 is coated with a silver reflector layer 14. If the device were used as a window, layer 14 would be omitted. The conductive indium tin oxide layers 12 are connected to electrical terminals 15 and 16 so that a voltage can be established across the solution located between plates 10 and 11 in cell 1.

To vacuum backfill cell 1, a small gap is introduced into seal 13 at some extremity corner. This acts as a fill hole. Solution can be filled through this hole and once inside the cell, the solution is contained by seal 13 between glass substrates 10 and 11. It is desirable to use a small fill hole so that the entrance oriface is small. Otherwise, it is difficult to seal the fill hole once the cell cavity is full such that no leaks occur through the fill hole. But since the fill hole is small, less than 1mm x 1mm x 150 microns typically, it is difficult to fill the cell cavity using a hypodermic needle or the like. Also, since there is only one fill hole, back pressure would impede complete filling through one fill hole anyway. Thus a means is needed to fill such a cell cavity that overcomes the above problems. Vacuum backfilling is such a means.

In the vacuum backfill technique, the empty cell is placed in a vacuum chamber along with a container (typically a dish or small cup) of the electrochemichromic fluid intended to be filled through the single fill hole into the cell cavity. The chamber is evacuated to a high vacuum, 1mm Hg or better. Means are then used to lower the fill hole just under the surface of the electrochemichromic fluid. The chamber is now vented to atmospheric pressure (typically using nitrogen or similar inert gas). Atmospheric pressure forces the fluid into the cell cavity

and so fills it. However, how completely it fills is a function both of the vacuum pressure upon evacuation $P_V$ and the atmospheric pressure $P_A$ to which the chamber is vented during venting.

Although a vacuum pump can evacuate a vacuum chamber to $10^{-6}$ mm Hg or better, the vapour pressure of the solvent limits how high a vacuum can be achieved. This is because the vacuum pump reduces the vacuum pressure down to the vapour pressure (at the temperature of the chamber) of the fluid used. Once the vacuum pressure equals the vapour pressure, vacuum pressure will go no lower until all the fluids have evaporated. Thus the choice of solvent, through its vapour pressure, dictates how large a bubble will remain after backfilling a given cell volume. As the device area increases such as might be encountered in window devices, the problem gets worse and, unless a sufficiently low vapour pressure solvent is chosen, or unless means such as cooling the fluid and chamber (to reduce vapour pressure) or overpressuring during backfill (to force more fluid in) are employed, a cosmetically unacceptable bubble will be left within the electrochemichromic cell. While a small bubble of about 1mm diameter may dissolve over time, a larger bubble will not completely disappear. Further, if the viscosity of the fluid to be filled is very high, then it may be difficult to fill at room temperature. If higher filling temperatures are used, the residual bubble may be larger as the vapour pressure increases with temperature. Simple physics teaches that :

$$P_A V_A = P_V V_V \quad (1)$$

where $P_A$ = pressure to which the chamber is finally vented.
$V_A$ = volume of gas trapped in the cell after completely filling the cell.
$P_V$ = vacuum pressure in the chamber after evacuation and prior to filling.
$V_V$ = volume of the empty cavity, i.e., cell volume.

Since undissolved gas trapped in the cell after incomplete filling will usually form a bubble, then $V_A$ can be written as :

$$V_A = \pi/4\ d^2\ t \quad (2)$$

where
d is the bubble diameter ; and
t is the cell cavity thickness.

Also, $P_A$ is usually 760mm Hg although it is important to stress that the chamber can be overpressured to several atmospheres or more after filling if it is desired to fill more completely. However, in the case where $P_A$ = 760 mm Hg and where $V_V$ = A x t where A is the cell area and t is the interpane thickness, we have :

$$P_V \cdot A \cdot t = 760 \cdot \pi/4 \cdot d^2 \cdot t \quad (3)$$

which reduces to

$$P_V = 5.969\ d^2/A \quad (4)$$

where d is in mm and A is in $cm^2$
Likewise

$$d = \sqrt{(P_V \times A)/5.969} \quad (5)$$

Equation (4) expresses the relationship between the residual gas bubble diameter d (in mm) and the cell area (in $cm^2$) to the pressure in the chamber, $P_V$, prior to venting to atmosphere and thus backfilling.

Note that if two solvents or more are mixed together to form an ideal solution, the vapour pressure of the solution is simply the sum of the vapour pressures of each component. The solvent GNT taught in this invention has a very low vapour pressure, so that it may be an excellent choice for use as a solvent component in electrochemichromic solutions intended to be vacuum backfilled. This is particularly important when large area devices such as 1 $m^2$ windows where the volume of cell cavity can be as large as 150 cc or thereabouts. By contrast, many of the prior art solvents, such as acetonitrile, methyl ethyl ketone, and dimethylformamide are unsuitable choices, even for use as components in solvent mixtures. Also, note that the solutions used as electrochemichromic fluids are sufficiently dilute for the various solutes (anodic/cathodic compounds, electrolyte, etc.) not to significantly depress vapour pressures.

Lower boiling point solvents such as acetonitrile, dimethylformamide and methyl ethyl ketone tend to have relatively high vapour pressures at room temperature. Thus, the higher boiling point GNT solvent of the present invention, which has a lower vapour pressure at room temperature, is significantly more suitable for the vacuum backfilling technique described herein. It tends to leave smaller bubbles in the filled cell.

## COMPARATIVE EXAMPLE 1

### The Experimental Data, Tables 1, 2 and 3 :

Table 1 compares a solvent used in the electrochemichromic liquids of the present invention to three conventionally suggested prior art electrochemichromic solvents : propylene carbonate, gamma butyrolactone and dimethylformamide. The first and second columns give the boiling point and freezing point respectively for the various solvents, including that used in the present invention. The third column indicates the appearance of electrochemichromic solutions at zero applied potential made in accordance with the present invention in an electrochemichromic cell.

COMPARATIVE EXAMPLE 2

Electrochemichromic cell 1 (Figure 2) was used for the data contained in the third column of Table 1 and the data in Table 2. The cell area was about 110 $cm^2$ and thickness was about 150 microns. Sheet resistance of the ITO transparent conductors used in the cell was 15 ohms per square. For Table 2, the cells were powered to 1 volt. Each cell was filled with a solution of the indicated solvent or solvent combination, containing 0.025 molar methylviologen perchlorate, 0.025 molar 5,10-dihydro 5,10-dimethylphenazine and 0.025 molar tetraethylammonium perchlorate unless otherwise indicated. Conventional techniques were used to ensure the solutions were oxygen free and were anhydrous. Table 2 compares electrochemichromic solutions which are identical in all respects except that different solvents were used. Propylene carbonate (PC), gammabutyrolactone (GBL), dimethylformamide (DMF) and acetonitrile (AN), conventional solvents, were compared to glutaronitrile (GNT) and to mixtures of GNT with 3-hydroxypropionitrile (HPN), 3,3'-oxydipropionitrile (ODPN), 3-methylsulpholane (MS) and propylene carbonate (PC).

The first four data columns of Table 2 give reflectivity data. Reflectivity is measured in a conventional manner using standard illuminant A and a photodetector that reproduces the eye's photopic response and is expressed as a percentage of incident light which is reflected by the mirror. The first data column discloses the high percentage reflectivity as measured when the electrochemichromic solution is at zero potential and thus is colourless. The second column measures the low percent reflectivity, which is determined when the electrochemichromic solution is coloured at 1 volt applied potential.

The third column measures the time in seconds that it takes for the solution to colour from 70% reflectivity to 20% reflectivity. The fourth column indicates in seconds the time it takes for the solution to bleach from 10% reflectivity to 60% reflectivity. The fifth column of Table 2 measures current leakage for the fully coloured solution presented in amperes per square metre.

Table 3 discloses the solubility of various UV stabilisers in GNT used in the present invention.

Table 1

| Solvent | Boiling Point | Freezing Point | Colour In Cell |
| --- | --- | --- | --- |
| Propylene carbonate<br>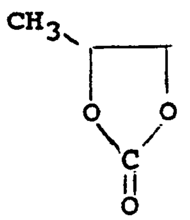 (PC)<br>(Prior art) | 240°C. | -55°C. | Clear and Colourless |
| gamma-Butyrolactone<br>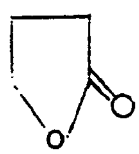 (gamma-BL)<br>(Prior art) | 205°C. | -45°C. | Clear and Colourless |
| Dimethylformamide<br>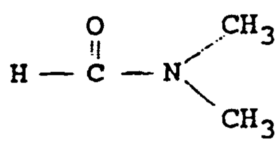<br>(DMF)<br>(Prior art) | 153°C. | -61°C. | Clear and Colourless |
| Glutaronitrile (GNT)<br>$NC(CH_2)_3CN$ | 286°C | -29°C | Clear and Colourless |

Table 2

| | HI %R | LOW %R | Colour 70%-20%R Sec | Bleach 10%-60%R Sec | Leakage current $A/m^2$ |
|---|---|---|---|---|---|
| PC (prior art) | 80.6 | 8.3 | 4.5 | 4.8 | 7.18 |
| GBL (prior art) | 78 | 15.1 | 7.1 | 3.4 | 5.6 |
| DMF (prior art) | 81.3 | 27.2 | 8.75 | 1.54 | 8.40 |
| *AN (prior art) | 81 | 43 | 1.5 | 1.5 | 9.8 |
| HPN (prior art) | 81.5 | 7.5 | 3.7 | 5.43 | 6.76 |
| OPDN (prior art) | 80.3 | 6.1 | 3.7 | > 10 | 2.68 |
| ABL (prior art) | 80.1 | 6.7 | 3.9 | 9.4 | 3.83 |
| MS (prior art) | 81.5 | 7.4 | 5.0 | > 10 | 1.54 |
| ** (prior art) | 80.2 | 7.6 | 4.5 | 9.34 | 3.1 |
| GNT (Invention) | 78.5 | 7.1 | 3.5 | > 10 | 3.59 |
| PC/GNT (Invention) | | | | | |
| 75/25 | 81.4 | 8.05 | 4.63 | 5.36 | 5.71 |
| 50/50 | 80.5 | 6.2 | 3.65 | 7.35 | 5.33 |
| 25/75 | 81.3 | 6.95 | 4.30 | 7.43 | 4.64 |
| HPN/GNT (Invention) | | | | | |
| 75/25 | 78.9 | 7.3 | 3.34 | 5.19 | 6.7 |
| 50/50 | 80.2 | 6.6 | 3.78 | 5.7 | 5.77 |
| 25/75 | 79.3 | 7.2 | 3.85 | 6.04 | 5.5 |
| GNT/MS (Invention) | | | | | |
| 50/50 | 85.1 | 7.0 | 4.6 | 14.4 | 2.19 |
| GNT/OPDN (Invention) | | | | | |
| 50/50 | 84.5 | 6.6 | 4.7 | 10.97 | 2.9 |

*Counterion is tetrafluoroborate instead of perchlorate

** Counter ion is hexafluorophosphate

AN = Acetonitrile

GBL = Gammabutyrolactone

PC = Propylene Carbonate

HPN = 3-Hydroxypropionitrile

ODPN = 3,3'-Oxydipropionitrile

MS = 3-Methylsulpholane

DMF = Dimethylformamide

GNT = Glutaronitrile

MGNT = Methylglutaronitrile

Table 3

Solubility of various UV stabilisers in GNT.
All data is wt/vol% and at room temperature.

GNT

Tinuvin P™ 0.4

| | |
|---|---|
| Uvinul 400™ | 12.6 |
| Cyasorb 24™ | 15.5 |
| Uvinul N-539™ | 35.9 |
| Tinuvin P™ | = 2-(2H-benzotriazole-2-yl)-4-methyphenyl Ciba Geigy, Hawthorne, New York |
| Uvinal 400™ | = 2,4-dihydroxy-benzophenone BASF Wyandotte Corp., Wyandotte, MI |
| Cyasorb 24™ | = 2,2'dihydroxy-4-methoxybenzophenone American Cyanamid Company, Wayne, NJ |
| Uvinal N-539™ | = 2-ethylhexyl-2-cyano-3,3-diphenyl-acrylate (Note : a liquid) BASF Wyandotte, Wyandotte, MI |
| GNT | = Glutaronitrile |

Glutaronitrile :

Glutaronitrile has a boiling point of 286°C and hence may withstand the high temperatures which can be generated by a mirror or the like sitting in the sun (Table 1). Similarly, it has a freezing point of -29°C and thus is unlikely to freeze in cold winter weather. Electrolytes show excellent solubility, i.e. greater than 0.05 molar. The solutions are clear in an electrochemichromic cell.

UV stabilisers, like the electrolytes, also show excellent solubility in GNT. This makes it possible to enhance UV stability of GNT electrochemichromic solutions.

GNT electrochemichromic solutions exhibit a high percentage reflectivity in their bleached condition (78.5%, Table 2). Similarly, their reflectivity when coloured is low, i.e., 7.1%. GNT solutions also tend to colour fast (3.5 seconds), and they bleach satisfactorily.

One of the most important advantages of GNT solutions over prior art solutions such as propylene carbonate solutions is that they may have lower current leakage. The GNT solution of Table 2 exhibits leakage of 3.59 amperes per square metre versus 7.18 amperes per square metre for a comparable propylene carbonate solution (Table 2) or 9.8 amperes per square metre for a comparable acetronitrile solution (Table 2).

Solvent Mixtures

The Table 2 data demonstrates that the solvent used in the present invention, glutaronitrile, may also work well in combination with other solvents. Preferred solvents include HPBN, ODPN and/or MS.

Thus, the inherent properties of other solvents may be enhanced when they are combined with GNT, especially when the solvent comprises at least about 25% by weight GNT.

The Table 2 results for propylene carbonate alone should be compared to the results achieved for propylene carbonate combined with 25%, 50% and 75% by volume GNT. In each case, the combination of propylene carbonate with glutaronitrile shows a decrease in leakage current over propylene carbonate per se, without a significant degradation in clear to coloured spread, time to colour or time to bleach. However, the coloured to uncoloured light transmission spread may still be regarded as exceptional. The time to bleach may similarly be superior to the performance achieved by GNT alone.

Table 2 shows combinations of various other solvents with glutaronitrile. Thus, beneficial combinations can be seen involving GNT and ODPN, GNT and HPN and GNT and MS. In all cases, the results in terms of high and low reflectance, time to colour, time to bleach and leakage current may be exceptional.

Thus by using blends of glutaronitrile with other solvents, one can obtain a combined solvent with desirable attributes of both. The faster times to colour and bleach of solvents such as propylene carbonate may be combined with the lower leakage current of glutaronitrile by incorporating (e.g. at least about 25% of) glutaronitrile in accordance with the present invention.

Prior Art Solvents :

Referring to the prior art solvents, it can be seen that except for gammabutyrolactone (GBL), they all have a relatively high leakage current, i.e., in excess of 7.18 amps per square metre. While GBL has a relatively low leakage current, its low end light transmittance, i.e., transmittance when coloured, is relatively high. In the electrochemichromic mirror as described, it exhibits 15.1% reflectance, as distinguished from less than 10% reflectance for electrochemichromic mirrors made using solvents of the present invention. GBL also has a relatively high vapour pressure, i.e., 3.2mm Hg at 25°C, making vacuum backfilling difficult. Dimethylformamide (DMF) and acetonitrile (AN) performed even worse in terms of percent reflectivity when coloured (i.e., 27.2% and 43% respectively).

Self-Shielding UV Stabilisation :

The solar spectrum in the ultraviolet (UV) region incident at a desert location such as Tucson, Arizona, is shown in Figure 1. The Y ordinate represents the solar energy expressed in microwatts/$cm^2$/100A° band. This solar spectrum typically passes through an ITO coated glass front piece to irradiate the solution inside the electrochemichromic cell 1 as shown in Figure 2. The transmission of ITO coated glass (0.063" sodalime coated to half wavelength thickness with 1500A° ITO) is shown in Figure 3. Thus the solar energy spectrum transmitted into the electrochemichromic fluid is the convolution of Figure 1 with Figure 3. This is shown in Figure 4. The ITO coated glass passes about 55% of the incoming UV solar energy in the 250 to 350 nm region. Thus a substantial portion of the solar UV is unattenuated by the ITO coated glass front piece. This UV radiation passes into the electrochemichromic fluid where it irradiates the electrochemichromic species dissolved therein.

As shown in Figure 5, the cathodically colouring species disclosed in prior art literature such as methylviologen (MV), ethylviologen (EV), benzylviologen (BV), and heptylviologen (HV) have an absorption peak below 295 nm and thus should be largely nonabsorbing to the solar UV transmitted into the electrochemichromic cell. However, as shown in Figure 6, anodic compounds, such as 5,10-dimethyl-5,10-dihydrophenazine (DMPA), 5,10-diethyl-5,10-dihydrophenazine (DEPA), tetramethylphenylenediamine (TMPD), tetramethylbenzidine (TMBZ) and tetrathiafulvalene (TTF) have substantial UV absorbance in the 250 to 350 nm region. For example, DMPA in 0.0002M solution in acetonitrile (AN) and in a 1 mm pathlength quartz cell absorbs about 22% of the UV solar spectrum passed by ITO coated glass in the 250 to 350 nm region.

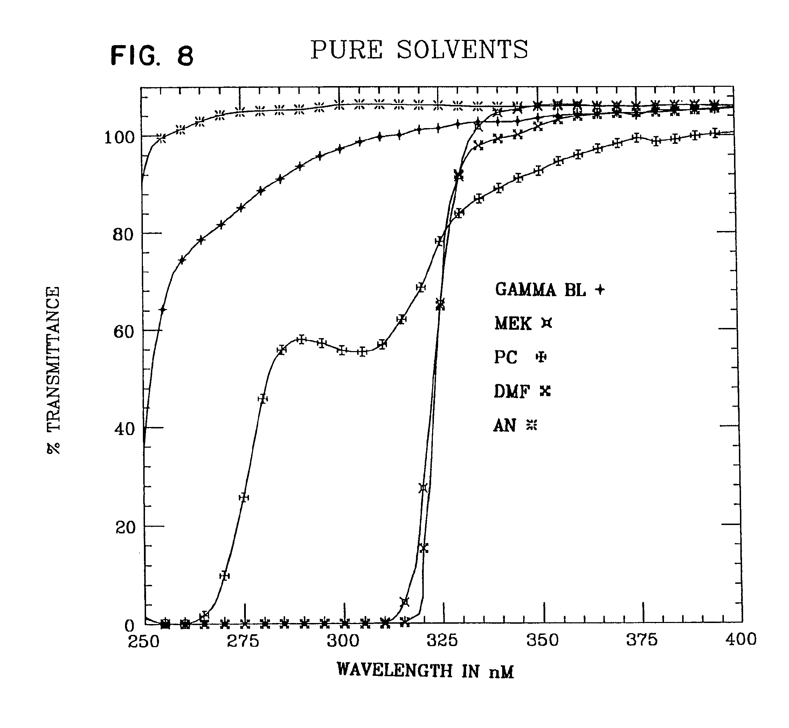

Thus, it is desirable to shield the electrochemichromic compounds from UV irradiation in this region. One aspect of the present invention involves the use of glutaronitrile as a solvent which may self-screen solutes dissolved therein from the detrimental effects of UV radiation impinging thereon. Specifically, it has been surprisingly found that glutaronitrile, when used in a one millimetre path length, transmits no more than about 40% of the solar radiation in the 250 to 350 nm range passed through a typical transparent ITO coated glass substrate. Such a substrate would typically be soda lime glass of approximately 0.063 inch thickness, coated with a half wave (1500°A) ITO transparent conductive layer. Thus the glutaronitrile, in addition to acting as solvent for electrochemichromic compounds that may allow the resulting electrochemichromic solution to cycle well from a high transmitting state to a low transmitting state, may also have the additional beneficial property of self-absorbing substantial proportions of the UV solar insolation in the 250 to 350 nm region. Figure 7 shows the transmission in this region of glutaronitrile (GNT). The spectrum is taken in a 1 mm pathlength quartz cell. This 1 mm cell filled with GNT transmits from 250 nm to 350 nm only about 40% of the solar radiation passed by half wave (1500°A ITO coated standard soda lime glass of a thickness of about 0.063 inches. This data can be compared to Figure 8, which shows the UV transmission, in a 1 mm pathlength cell, for various prior art solvents used in electrochemichromic solutions. Note that these are mostly completely transmitting in the ultraviolet region in that they absorb very little between 250 nm to 350 nm. For example, propylene carbonate in a 1 mm cell transmits about 87% of the solar energy passed through ITO coated glass between 250 nm and 350 nm ; dimethylformamide (DMF) about 89%, acetronitrile (AN) about 100% ; and methyl ethyl ketone (MEK) about 93%. Thus, GNT helps extend the UV lifetime of electrochemichromic solutions by shielding the UV fragile electrochemichromic compounds that are solutes in the UV self-screening solvent.

Self-screening by the solvent is more effective than screening with a UV inhibiting solute because the solvent is by far the majority component in the liquid or solution. For example in a 0.025M solution in GNT, the molarity of the solute is 0.025M while molarity of the solvent is 10.51M so that there are roughly 420 solvent molecules for every solute molecule in solution. Thus, the probability is greatest for an incoming UV photon may impinge and be absorbed by a solvent molecule (which typically is UV resilient), rather than impinge and be absorbed by a solute molecule (which, in the case of electrochemichromic species), is usually UV fragile and degraded by UV irradiation).

Although addition of UV stabilisers such as benzotriazoles, benzophenones, or hindered amine complexes, as known in the prior art, can help increase solution stability to UV radiation, there are limitations and disadvantages to addition of UV stabilisers. Since they are held in solutions of low to moderate viscosity, both the UV stabiliser and the electrochemichromic solution species that the solution is intended to stabilise are free to randomly move about in the solution. Thus, an incoming photon of UV radiation may impinge and thus degrade an electrochemichromic solute species rather than a UV absorber in solution.

Also solvent solubility places limits on the amount of stabiliser that can be added. Since UV stabilisers typically have molecular weights in the 250 to 400 range, the molarity of UV stabiliser concentration is 5% wt/volume. Thus UV stabilisers outnumber solute by about 400 to 1 and thus the inherent self-screening that may be achievable by the solvent GNT, working in conjunction with dissolved stabiliser, may help enhance the UV stability of electrochemichromic devices that use the UV self-screening solvent GNT.

Additional Examples

The following examples further illustrate the important and unexpected advantages of the solutions of the present invention over the prior art :

COMPARATIVE EXAMPLE 3 (Prior Art DMF) :

A self-erasing electrochemichromic cell solution was prepared based on the prior art of Shelepin, as taught in Elektrokhimya, 13(3), 404-408 (March 1977). This consisted of :

0.05M Methylviologen perchlorate

0.05M 5,10-dihydro-5,10-dimethylphenazine

10% weight/volume polymethylmethacrylate (90,000 average molecular weight dissolved in dimethylformamide (DMF).

In addition, 0.05M tetraethylammonium perchlorate was added as inert current carrying electrolyte as taught in Manos U.S. Patent 3,451,741 (June 24, 1969).

The solution was prepared under oxygen-free conditions and anhydrous argon gas was bubbled through the solution to further deoxygenate the solution. A roughly 23 cm x 5.6 cm rectangular cell was fabricated according to the construction shown in Figure 2. The cell cavity was formed by silk-screening a roughly 2 mm x 150 micron epoxy seal around the edge perimeter of one of the ITO transparent conductive coated glass substrates shown in Figure 2. Sheet resistance for the ITO transparent conducting coating used on both substrates was about 15 ohms/square. Prior to its silk-screening, glass beads of nominal diameter 150 microns were mixed with the epoxy. Before curing of the epoxy, the second ITO coated glass substrate was contacted to the epoxy seal and the now laminated construction was baked in an oven to cure the epoxy. A small gap of approximately 2 mm x 1 mm x 150 micron dimension had been allowed in the epoxy seal so that, upon lamination, a small fill hole was available close to one corner of the seal through which fluid could flow during the vacuum backfilling process. Attempts at room temperature to vacuum backfill this solution failed. When vacuum was applied, the DMF-based solution boiled and could not be filled into the cell cavity.

With this prior art solution, two fill holes were drilled through the face of one of the ITO coated glass substrates so that fluid could be filled into the cell cavity using suction at one hole to pull solution from a syringe tightly held to the other hole. Each hole was of approximately 1 mm diameter. For this construction, no fill hole was allowed in the epoxy seal.

After the DMF-based electrochemichromic solution described above was filled into the cell cavity using suction pull through from a syringe, the holes drilled through the glass substrate were plugged with epoxy. Using this nonvacuum backfilling technique, the prior art DMF solution could be successfully filled into the cell cavity. This filling technique, although practical at a laboratory or prototype level, has disadvantages for commercial devices which include difficulties in securely plugging the relatively large fill holes drilled through the glass substrate.

Consistent with prior art teachings, electrochemichromic windows and mirrors, produced as described above and using the DMF-based formulation from prior art, were found to have the variable transmission (or variable reflection in the case of mirrors), cycle lifetime and colouration efficiency required to render single-compartment, self-erasing, solution-phase electrochemichromic devices commercially practical.

For example, a roughly 129 $cm^2$ window was constructed of dimension 23 cm x 5.6 cm x 150 microns cell thickness. When filled with the prior art DMF-based formulation, and where a silver mirror reflector was placed behind this window, the reflectance from the mirror, which initially was 81.3%R, dimmed rapidly to about 27.2%R as measured at the centre of the rectangular device.

To dim the mirror reflectance, a potential of 1 volt was applied to bus bars that ran lengthwise along the outer perimeter of the ITO coated transparent substrates that sandwiched the DMF-based electrochemichromic solution. Upon removing the applied potential, the electrochemichromic solution self-erased back to a clear state so that the mirror reflectance returned to 81.3%R. Alternatively, the cell could be more rapidly bleached by shorting the electrodes. Cycle lifetime was established by applying 1 volt potential across the electrochemichromic solution for 30 seconds to dim the transmission, followed by shorting the cell electrodes for 30 seconds to bleach back to the clear state. This colour for 30 seconds followed by bleach for 30 seconds cycle was continued for over 10,000 cycles. Colouring efficiency was maintained ; the clear state reflectivity remained high while the cell continued to dim in its centre to about 27%R.

There are three significant disadvantages to using this prior art DMF-based formulation for commercial applications. The large leakage current which was in excess of $8A/m^2$ would lead to undesirable power drain in practical devices and particularly in large window or mirror devices. Also, although colouration was efficient as seen by the deep colouration close to the bus bars, colouration was very nonuniform, even for this relatively small window of 129 $cm^2$ area. Also, although thickener was added as suggested by the prior art to limit segregation, segregation was nevertheless present even after relatively modest prolonged colouration. For these

reasons, coupled with the impracticality of using vacuum backfilling, this prior art DMF-based solution was seen to be inferior to mirror and window devices made possible by the solutions of this present invention.

EXAMPLE 4 (GNT Solution) :

A self-erasing electrochemichromic solution was formed of :
0.025M Methylviologen perchlorate
0.025M 5,10-dihydro-5,10-dimethylphenazine
0.025M Tetraethylammonium perchlorate
5% weight/volume 2,4-dihydroxy-benzophenone (UV stabiliser "Uvinal 400™) dissolved in glutaronitrile (GNT).

This solution was filled using vacuum backfilling into an interior rearview mirror shaped window constructed as shown in Figure 2 of length about 24 cm and width about 5 cm, and of cell area about 110 $cm^2$. The interpane gap was 150 microns. Glass coated with ITO of sheet resistance 15 ohms/square and greater than 85% visible transmittance was used. A silver mirror reflector was placed behind the window. Without any applied voltage, the cell was clear and colourless and the reflectance from the mirror was about 78.5%R. When 1 volt potential was applied across the cell, reflectance of the mirror was reduced to 7.1%R, as measured at the centre of the window device. Colour transition time from 70%R to 20%R was 3.5 seconds. When the electrodes were shorted, bleach time from 10%R to 60%R was greater than 10 seconds. Colouration was both efficient and satisfactorily uniform. Leakage current was about 3.59 $A/m^2$.

After prolonged colouration for 30 minutes, segregation performance as evidenced by a blue band adjacent to the cathodically powered bus bar was small. Segregation performance and uniformity were greatly improved over that seen in Comparative Example 3, even though no additional thickening agents such as are taught to be necessary in Shelepin, supra in Comparative Example 3, and in Byker European Patent Publication 240,226, were used. Nor was the use of a high concentration of current-carrying salt necessary, such as is taught to be necessary for commercial practicality of the solutions taught in EP-A-240,226.

The GNT-based formulation had the colouring efficiency and uniformity required to be commercially practical and it showed unexpectedly excellent cycle lifetime. Cells fabricated as described in this Example have been cycled in excess of 100,000 cycles without any significant deterioration in the performance described above. Each cycle consisted of 30 seconds colour at 1V applied, and 30 seconds bleach at 0V applied, i.e., with the electrodes shorted. The cell is undamaged when subjected to prolonged colouration. Performance is maintained after baking at 85°C for two weeks. Cells are not damaged by prolonged storage at low temperatures of -20°C or lower. The formulation described here is sufficiently UV stable, at least for use in the interior cabin of an automobile. The low leakage current discovered in GNT solutions makes this formula particularly well suited for use in large area windows and mirrors where voltage drops across transparent conductors due to excessive leakage currents leading to undesirable and commercially impractical nonuniform colouration along with excessive segregation.

EXAMPLE 5 (HPN/GNT) :

A self-erasing electrochemichromic solution was formulated as described in Example 4, but using a 50%: 50% volume by volume mixture of glutaronitrile (GNT) and 3-hydroxypropionitrile (HPN) as the solvent. When filled into a cell as described in Example 4, and with a silver mirror reflector placed behind the window, mirror reflectance was 80.2%R in the clear state, which dimmed to 6.6%R when 1 volt was applied. Colour time to dim from 70%R to 20%R was 3.78 seconds. Leakage current was about 5.77 $A/m^2$. Bleach time from 10%R to 60%R was 5.7 seconds and thus adequate for an automotive rearview mirror application, and very acceptable in a window application. Colouring efficiency and colouring uniformity were excellent, as was segregation performance which was exceptionally good. Cells formulated according to this Example may have excellent cycle lifetime with in excess of 60,000 30 second colour and 30 second bleach cycles tested without any significant deterioration in performance. The high temperature, and UV performance for this solution are similar to that reported above in Example 4.

EXAMPLE 6 (GNT with ODPN, MS) :

Solutions were formulated, and devices fabricated and tested as described in Example 4, but using a 50%: 50% volume by volume mixture of 3,3'-oxydipropionitrile (ODPN) and GNT as the solvent. Excellent cycle lifetime, colouring efficiency, colouring uniformity, high temperature, low temperature, and ultraviolet performance was achieved. Likewise, excellent performance was recorded with GNT combined with 3-methylsulfolane

in a 50% : 50% volume by volume mixture.

EXAMPLE 7 (Ethylviologen in HPN/GNT) :

A self-erasing, electrochemichromic solution was formulated comprising :
0.025M ethylviologen perchlorate
0.025M 5,10-dihydro-5,10-dimethylphenazine
0.025M Tetraethylammonium perchlorate
10% weight/volume 2,4-dihydroxy-benzophenone (UV stabiliser Uvinul 400TM dissolved in a 50 : 50 hydroxypropionitrile (HPN)/glutaronitrile (GNT) mixture.

When filled into a 24 cm x 5 cm x 150 micron cell, as described in Example 4, a silver mirror reflector placed behind the window so formed had a reflectivity of 80.3%R which dimmed to 6.5%R when 1 volt was applied across the ITO transparent conductors (of 15 ohms/square sheet resistance) used. Colouration was rapid (3.5 sec) and bleach response was satisfactory. Excellent colouration efficiency and colouration uniformity were maintained after cycle lifetime testing ; each cycle consisting of 1 volt applied for 30 seconds, followed by OV applied for 30 seconds.

EXAMPLE 8 (GNT-Variable Transmission) :

A window was formed as described in Example 4 consisting of :
0.025M Methylviologen perchlorate
0.025M 5,10-dihydro-5,10-dimethylphenazine
0.025M Tetraethylammonium perchlorate in a 50 : 50 mixture of glutaronitrile (GNT) and 3-hydroxypropionitrile (HPN).

This cell was powered at various voltages from 0V to 1.2V. The transmission at the center of this window, at various applied voltages, is shown in Table 4.

Table 4

| Applied Voltage Volts | % Transmission |
|---|---|
| 0V | 80.7 |
| 0.2V | 80.7 |
| 0.6V | 44.9 |
| 0.7V | 28.9 |
| 0.8V | 18.3 |
| 0.9V | 12.2 |
| 1.0V | 7.9 |
| 1.1V | 7.0 |
| 1.2V | 6.8 |

As can be seen from Table 4, % transmission can be varied between 80.7%T and 6.8%T by appropriately selecting the applied voltage. This ability to operate as a grey scale was found in all the novel solvent mixtures disclosed in this invention, and is consistent with prior art teachings and with the intrinsic properties of the electrochemichromic species themselves.

EXAMPLE 9 and COMPARATIVE EXAMPLE 10

(Commercial Cell Comparison) :

The practical benefit of these concepts can be illustrated by comparing the UV stability of a rearview mirror fabricated using the concepts of this invention to the UV stability of a commercially available electrochemichromic rearview mirror. The particular commercially available electrochemichromic mirror tested was an interior rearview mirror purchased from General Motors spare parts around July 1989 and it was marked #81091B on its rear surface. Analysis of these commercially available mirrors shows that their solutions contain benzylviologen (BV) and 5,10-dihydro-5,10-dimethylphenazine (DMPA) in propylene carbonate and also contain a benzotriazole UV stabiliser. Our electrochemichromic rearview mirror consisted of : 0.025M methylviologen perchlorate ; 0.025 M 5,10-dihydro-5,10-dimethylphenazine ; 0.025M tetraethylammonium perchlorate ; 5% by weight 2,4'-dihydroxy-benzophenone (Uvinul 400™) as UV stabiliser all dissolved in 50% HPN : 50% GNT. Both mirrors were exposed to a xenon arc lamp and were irradiated with UV radiation that closely simulated the solar UV intensity. The commercially available ECCM was irradiated for 240 hours. The HPN/GNT solution of this present invention was irradiated for 310 hours. The integrated intensity from 250 nm to 400 nm was around 70 watts/$M^2$. Results were :

| | HI %R | LOW %R | Colour 70%-20%R Sec | Bleach 10%-60%R Sec |
|---|---|---|---|---|
| Initially | | | | |
| Commercially Available ECCM (Comparative Example 10) | 81.3 | 6.2 | 3 | 6 |
| HPN/GNT 50/50 (Example 9) | 80.4 | 7.1 | 4 | 7.5 |
| 240 Hours UV Exposure | | | | |
| Commercially Available ECCM (Comparative Example 10) | 54.1 | 15 | 6* | 9** |
| 310 Hours UV Exposure | | | | |
| HPN/GNT 50/50 (Example 9) | 81.3 | 7.2 | 3 | 4.5 |

* 54.1%R to 20%R

**15%R to 54.1%R

The formulation in accordance with the present invention performed remarkably better than the commercially available formulation in that they maintained their high reflectance state of about 80%R, whereas the prior art commercial product dropped its zero potential reflection to only about 54%R, principally due to its yellowing.

## Claims

1. An electrochemichromic liquid comprising :
   a redox chemical pair whose colour can be varied by a variation in the applied voltage ; and
   a solvent comprising at least 25% by volume of glutaronitrile.

2. An electrochemichromic liquid according to claim 1 wherein the solvent comprises glutaronitrile and 3-methylsulpholane in a ratio by volume of from 75 : 25 to 25 : 75.

3. An electrochemichromic liquid according to claim 1 wherein the solvent comprises propylene carbonate and glutaronitrile in a ratio by volume of from 75 : 25 to 25 : 75.

4. An electrochemichromic liquid according to claim 1 wherein the solvent comprises glutaronitrile and 3,3′-oxydipropionitrile in a ratio by volume of from 75 : 25 to 25 : 75.

5. An electrochemichromic liquid according to claim 1 wherein the solvent comprises glutaronitrile and 3-hydroxyproprionitrile in a ratio by volume of from 75 : 25 to 25 : 75.

6. An electrochemichromic liquid according to any of claims 1 to 5 wherein the redox pair comprises a cathodic material which is a viologen, with a counterion which is perchlorate, tetrafluoroborate, trifluoromethanesulphonate, hexafluorophosphate and/or hexafluoroarsenate and an anodic material which is :
   DMPA - 5,10-dihydro-5,10-dimethylphenazine ;
   DEPA - 5,10-dihydro-5,10-diethylphenazine ;
   DOPA - 5,10-dihydro-5,10-dioctylphenazine ;
   TMPD - N,N,N′,N′-tetramethylphenylenediamine ;
   TMBZ - N,N,N′,N′-tetramethylbenzidine ; an/or
   TTF - Tetrathiafulvalene.

7. An electrochemichromic liquid according to claim 6 wherein the cathodic material consists of methyl and/or the counterion is hexafluorophosphate and/or hexafluoroarsenate and the anodic material is 5,10-dihydro-5,10-dimethylphenazine.

8. An electrochemichromic device containing an electrochemichromic liquid according to any of claims 1 to 7.

9. An electrochemichromic device as claimed in claim 8 which is a cell, such as a solar cell, a window, mirror or sunroof.

10. An electrochemichromic device according to claim 8 or 9 comprising :
    at least two spaced apart plates, each having an inwardly facing conductive surface, the electrochemichromic liquid being between the spaced apart plates.

11. A method for reducing leakage current and/or enhancing UV stability in an electrochemichromic device having at least two spaced apart plates, each plate having an inwardly facing conductive surface, and an electrochemichromic liquid located in the device between the plates, the liquid comprising a redox chemical pair whose colour can be varied by a variation in the applied voltage and a solvent comprising at least 25% by volume glutaronitrile.

12. A method of at least partially filling an electrochemichromic device comprising at least two spaced apart plates, each plate having an inwardly facing conductive surface, the spaced apart plates being sealed by a seal, the method comprising :
    providing the device with an aperture for fluid entry ;
    evacuating air from the device ;
    placing the electrochemichromic device into a container of electrochemichromic liquid such that the aperture is located under a surface of the electrochemichromic liquid, the liquid comprising a redox chemical pair whose colour can be varied by a variation in the applied voltage and a solvent comprising at least 25% by volume of GNT ;
    exposing the electrochemichromic device to a source of pressure greater than that inside the device

to allow the liquid to enter the device.

13. A method according to claim 12 wherein evacuating air from the device comprises placing the device in a vacuum chamber along with a container of the electrochemichromic liquid and evacuating the chamber ; after exposure subsequently venting the chamber to atmospheric pressure ; and/or removing the device from the container before sealing the device.

FIG. 1

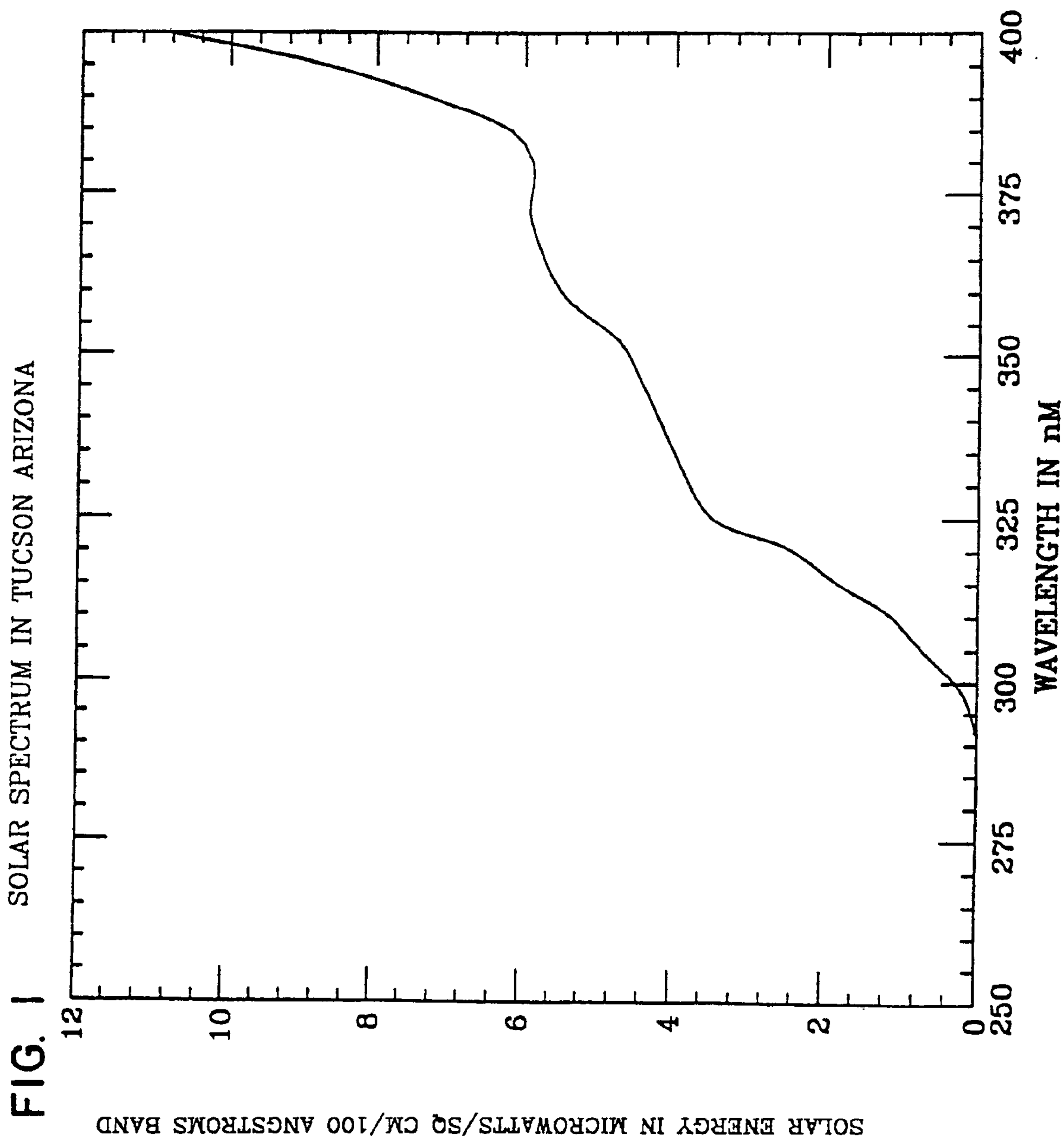
SOLAR SPECTRUM IN TUCSON ARIZONA
SOLAR ENERGY IN MICROWATTS/SQ CM/100 ANGSTROMS BAND
0
2
4
6
8
10
12
250
275
300
325
350
375
400
WAVELENGTH IN nM

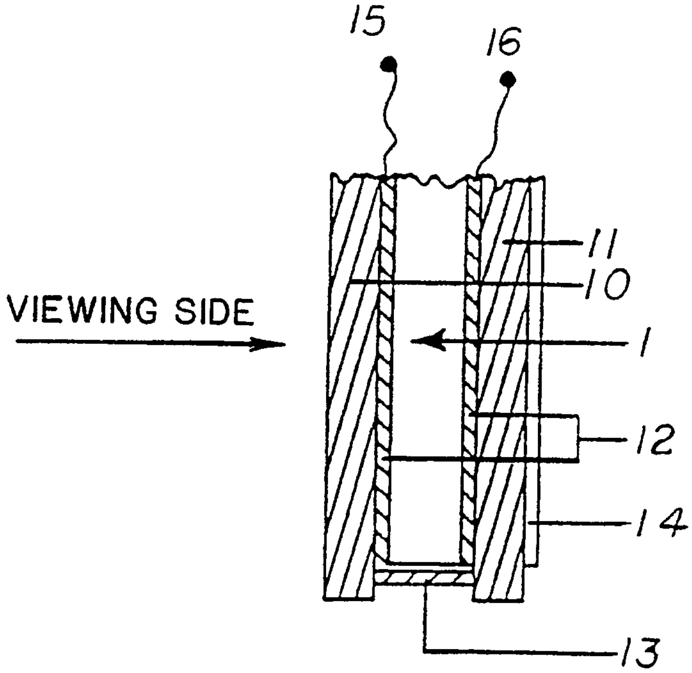


Fig 2

FIG. 3

HALF WAVE ITO

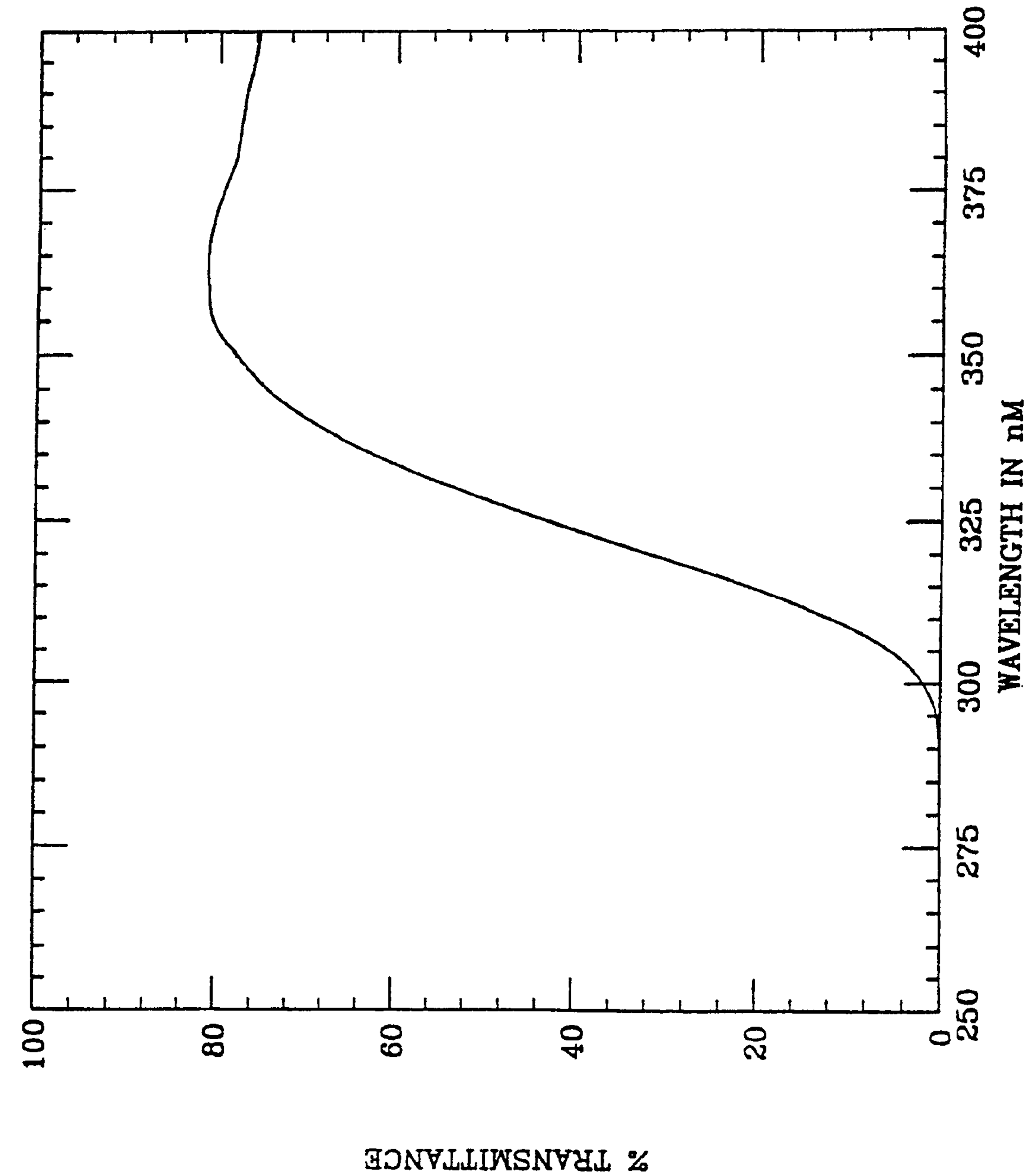

FIG. 4

SOLAR SPECTRUM PASSED BY ITO-GLASS

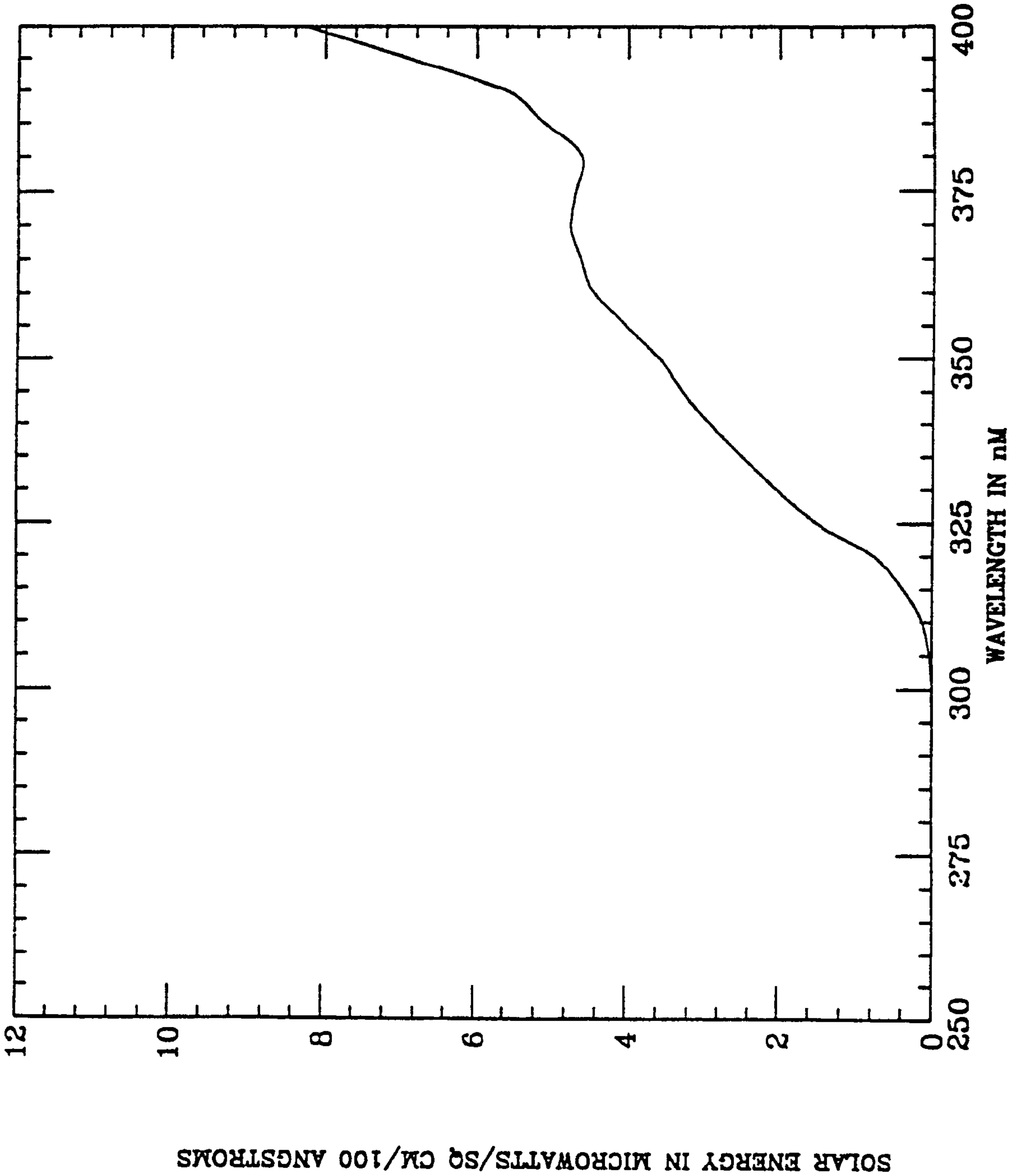

FIG. 5

CATHODIC COMPOUNDS

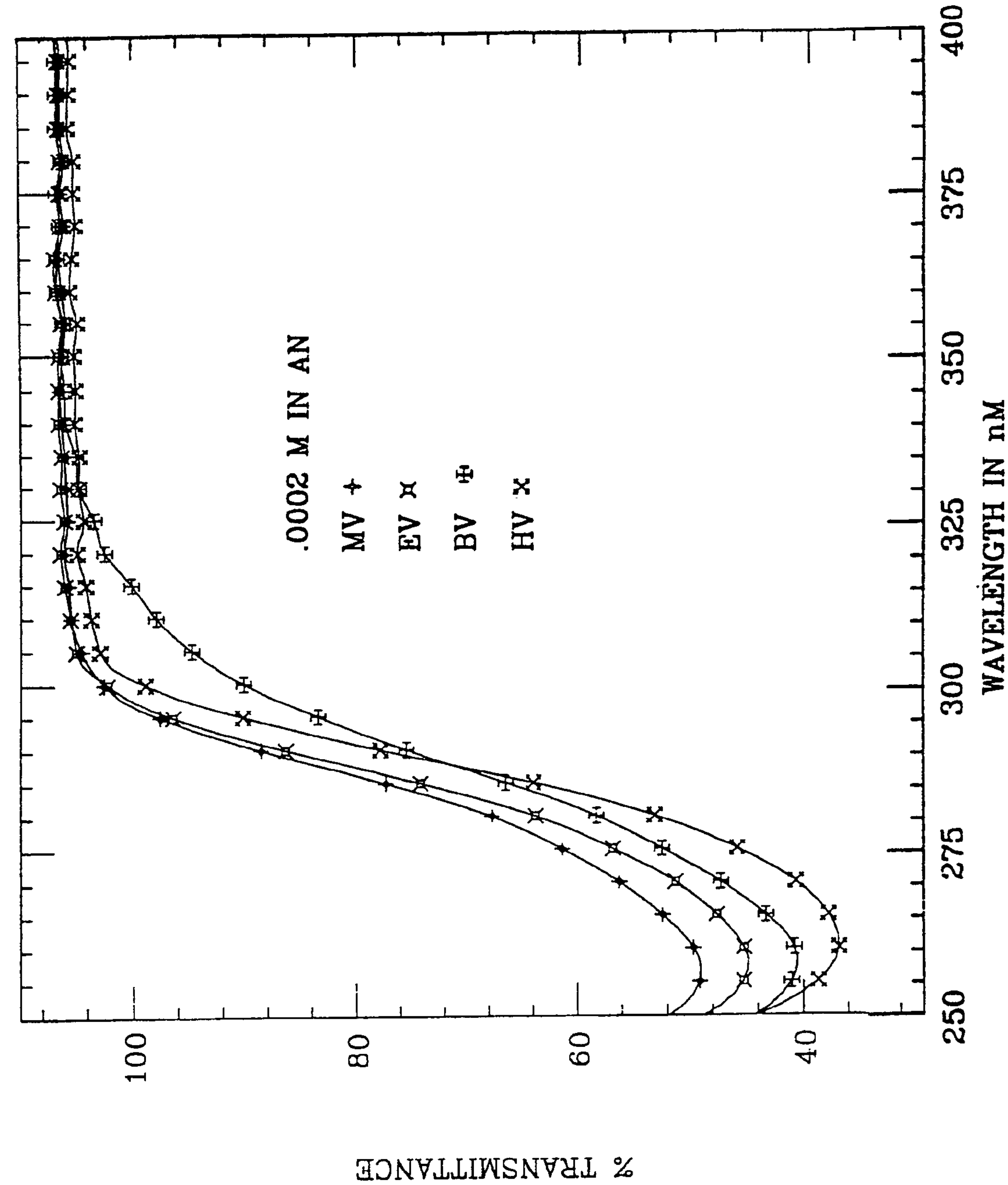

FIG. 6

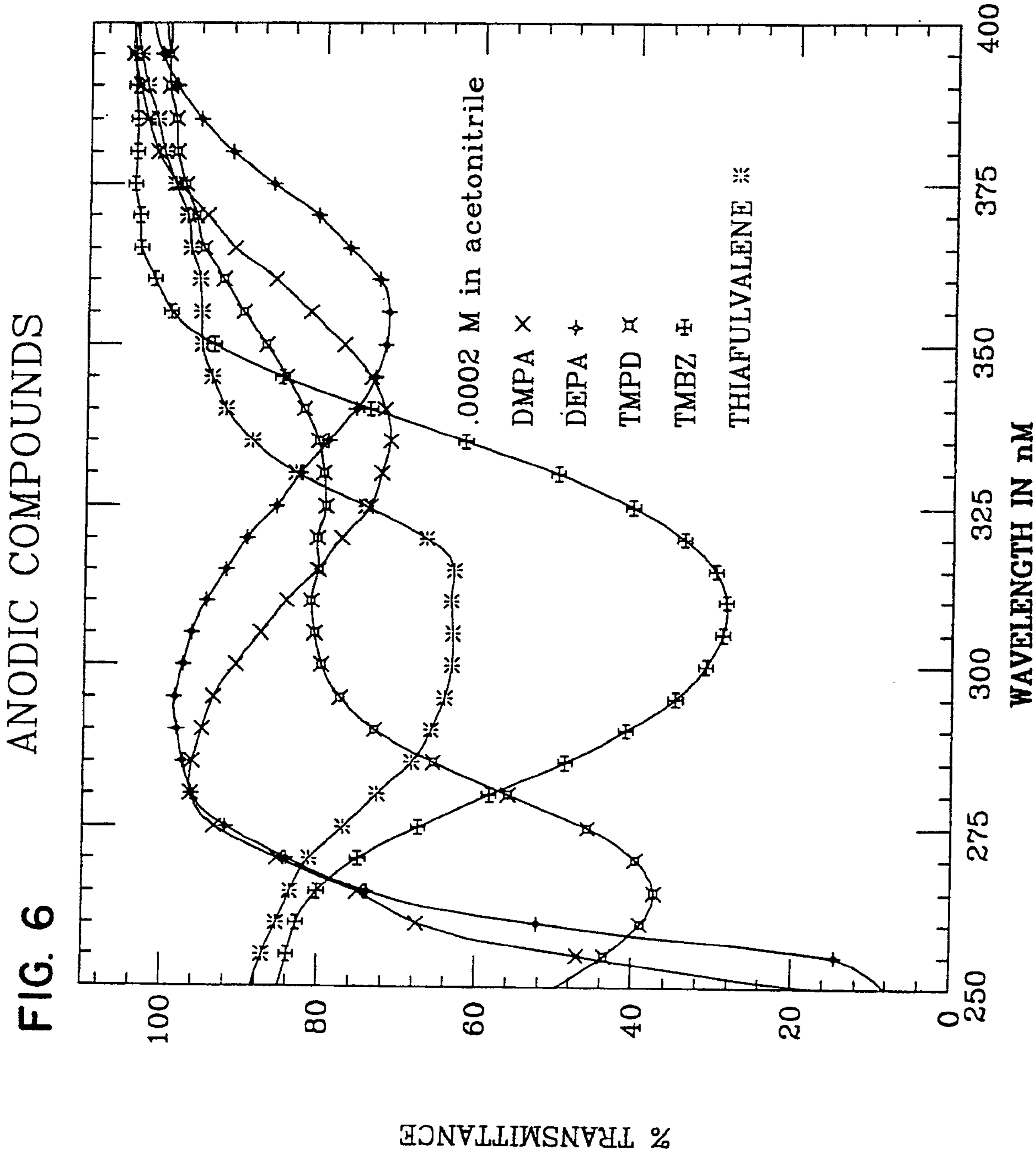
ANODIC COMPOUNDS
.0002 M in acetonitrile
DMPA
DEPA
TMPD
TMBZ
THIAFULVALENE
% TRANSMITTANCE
WAVELENGTH IN nM
0
20
40
60
80
100
250
275
300
325
350
375
400

FIG. 7

GNT

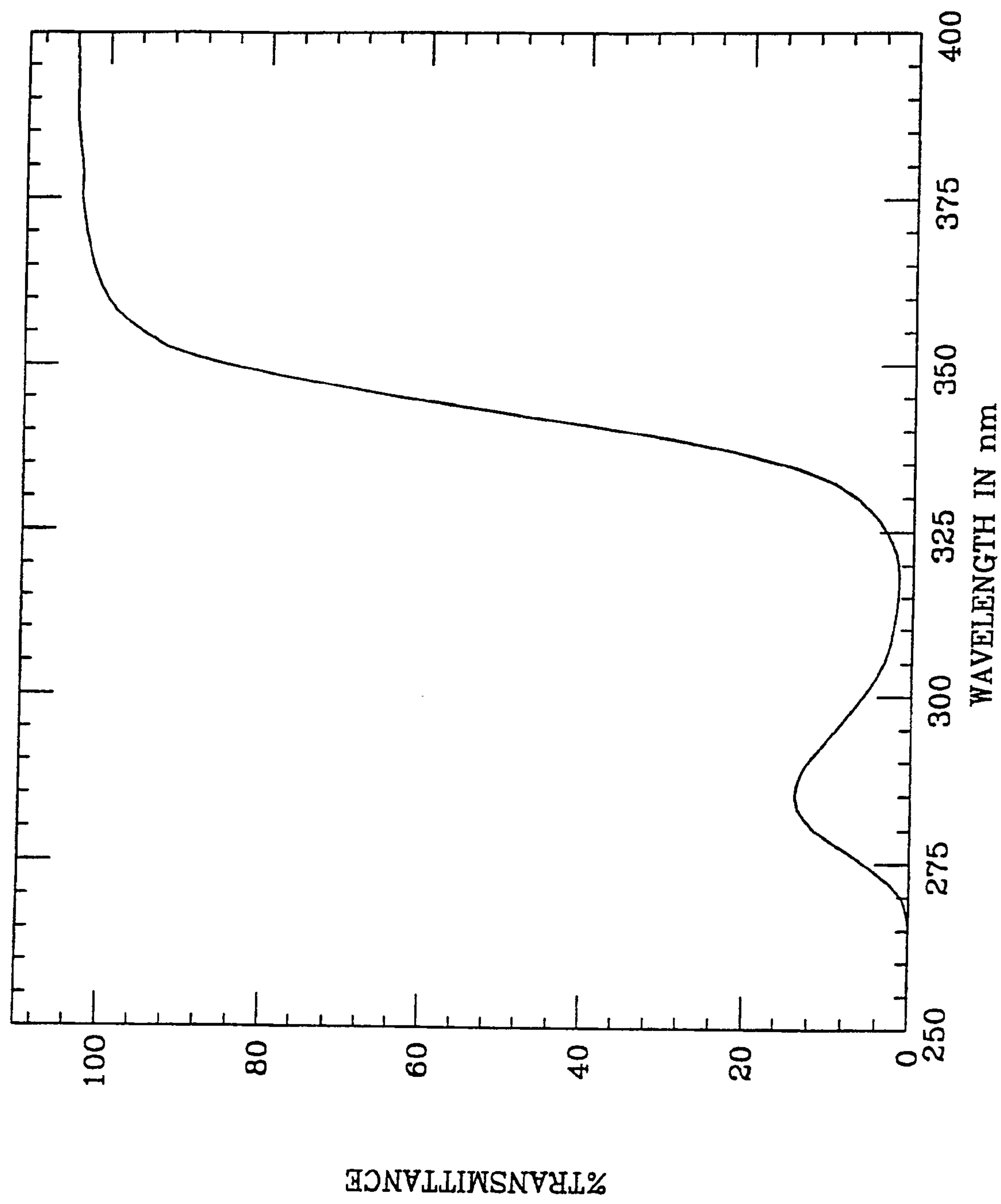
%TRANSMITTANCE
0
20
40
60
80
100
WAVELENGTH IN nm
250
275
300
325
350
375
400

FIG. 8

PURE SOLVENTS